# EUROPEAN PATENT APPLICATION

(11) **EP 4 177 499 A1**
(43) Date of publication of application: **10.05.2023**
(21) Application number: 20943519.7
(22) Date of filing: 02.07.2020
(51) Int. Cl.: F16J 15/10

(54) **SEAL DEVICE**

(71) Applicant: Kabushiki Kaisha Sangi, Tokyo 104-8440 (JP)
(72) Inventor: ITO, Tetsuya, Sagae-shi, Yamagata 991-0061 (JP); GOTO, Toshihito, Sagae-shi, Yamagata 991-0061 (JP); ISHIZAKI, Tsutomu, Tokyo 104-8440 (JP); ARAKAWA, Tadayoshi, Tokyo 104-8440 (JP)
(74) Representative: BOVARD AG
(86) International application number: PCT/JP2020/025970
(87) International publication number: WO 2022/003894

(57) **Abstract**

Provided is a seal device, which can reliably prevent leakage of substances from a gap in a coupling portion for two flow paths while improving ease of operation at the time of coupling the two flow paths to each other and decoupling the two flow paths from each other. The seal device includes: a first flow path (16A) which allows substances to pass therethrough; a second flow path (16B) separably coupled to the first flow path (16A); a sealing member (52), which has elasticity, and is held in a gap in a coupling portion (15) between the first flow path (16A) and the second flow path (16B); and a movable member (30) that closes the gap in the coupling portion (15) by deforming the sealing member (52) when the first flow path (16A) and the second flow path (16B) are to be coupled to each other.

## Description

### Technical Field

The present invention relates to a seal device that prevents leakage of substances from a gap between flow paths separably coupled to each other.

### Background Art

In general, seal devices that prevent leakage of substances such as liquid or gas have been known.

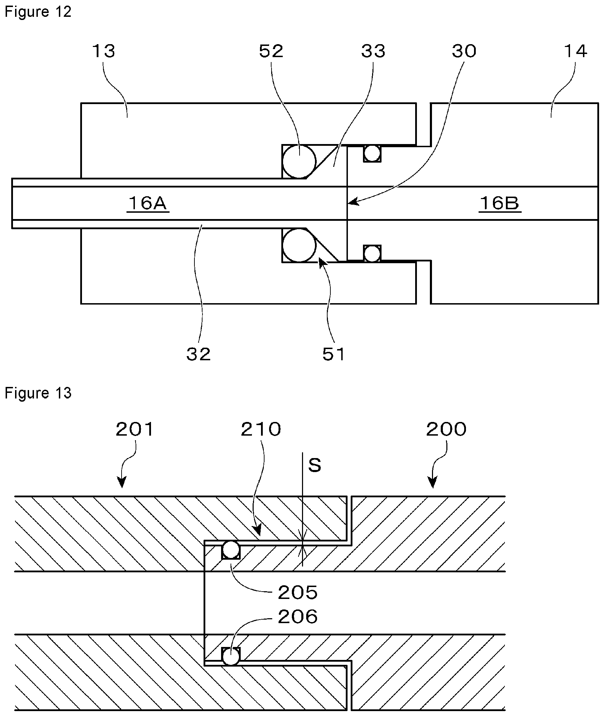

For example, in the seal device of this type, as illustrated in FIG. 13, a peripheral groove 205 is formed in an outer peripheral distal end portion of one flow path member 200 side of two flow path members 200 and 201 that function as supply passages for substances and are separably coupled to each other, and an annular rubber sealing member 206 called an O-ring is held in the peripheral groove 205. When the flow path members 200 and 201 are to be coupled to each other, the O-ring 206 comes into elastic contact with the flow path members 200 and 201 to close a gap S in a coupling portion 210, thereby preventing leakage of substances from the gap S in the coupling portion 210.

Further, the following seal device has been known. Specifically, in a dental handpiece having separable flow paths, a plurality of O-rings are arranged in parallel in a coupling portion for flow paths, thereby preventing leakage of air or liquid from a gap in the coupling portion (see, for example, Patent Literature 1).

### Citation List

### Patent Literature

[PTL 1] JP 3920281 (B2)

### Summary of Invention

### Technical Problem

Incidentally, when the above-mentioned seal device is applied to a flow path to which powdery solid fine particles having a particle diameter of from about 0.1 µm to about 10 µm are supplied, a problem in that the solid fine particles leak from the gap in the coupling portion has occurred. This because of the following reason. In the case of liquid, due to its nature, the liquid is less liable to enter the gap in the coupling portion due to surface tension, and a pressure applied to the O-ring is low so that leakage of substances is less liable to occur. However, the solid fine particles easily enter the gap, and a pressure higher than that of liquid is applied to the O-ring, with the result that leakage of substances occurs.

Further, it is conceivable to reduce an elastic force of the O-ring in order to suppress leakage of the substances. However, in this case, the contact resistance between the O-ring and the flow path member increases, and hence there is a fear in that ease of operation at the time of coupling two flow paths to each other or decoupling the two flow paths from each other is reduced.

The present invention has been made in view of the above-mentioned circumstances, and has a first object to provide a seal device capable of reliably preventing leakage of substances from a gap in a coupling portion for two flow paths, and has a second object to provide a seal device capable of easily improving ease of operation at the time of coupling the two flow paths to each other and decoupling the two flow paths from each other.

### Solution to Problem

According to the present invention, there is provided a seal device including: a first flow path which allows substances to pass therethrough; a second flow path separably coupled to the first flow path; a sealing member, which has elasticity, and is held in a gap in a coupling portion between the first flow path and the second flow path; and a sealing member deforming part that closes the gap in the coupling portion by deforming the sealing member when the first flow path and the second flow path are to be coupled to each other.

Further, it is preferred that the sealing member deforming part allow the deformed sealing member to restore to an original shape when the first flow path and the second flow path are to be decoupled from each other.

### Advantageous Effects of Invention

According to the present invention, it is possible to reliably prevent leakage of substances from the gap in the coupling portion for the two flow paths while improving the ease of operation at the time of coupling the two flow paths to each other and decoupling the two flow paths from each other.

### Brief Description of Drawings

FIG. 1 is an overall view of a powder jet deposition device including a hand piece to which a seal device according to a first embodiment of the present invention is applied.
FIG. 2 is an explanatory view for illustrating the hand piece in a decoupled state.
FIG. 3 is an explanatory view for illustrating a cross section of a main part of the hand piece in the decoupled state.
FIG. 4 is an explanatory view for illustrating a cross section of a main part of the hand piece in a coupled state.
FIG. 5 is an explanatory view for illustrating an operation example of the seal device, in which FIG. 5(a) is an explanatory view for illustrating a state of the seal device in the middle of being coupled, FIG. 5(b) is an explanatory view for illustrating a state of the seal device after being coupled, and FIG. 5(c) is an explanatory view for illustrating a state of the seal device after being decoupled.
FIG. 6 is an explanatory view for schematically illustrating a seal device according to a second embodiment of the present invention.
FIG. 7 is an explanatory view for schematically illustrating a seal device according to a third embodiment of the present invention.
FIG. 8 is an explanatory view for schematically illustrating a seal device according to a fourth embodiment of the present invention.
FIG. 9 is an explanatory view for schematically illustrating a seal device according to a fifth embodiment of the present invention.
FIG. 10 is an explanatory view for schematically illustrating a seal device according to a sixth embodiment of the present invention.
FIG. 11 is an explanatory view for schematically illustrating a seal device according to a seventh embodiment of the present invention.
FIG. 12 is an explanatory view for schematically illustrating a seal device according to an eighth embodiment of the present invention.
FIG. 13 is an explanatory view for schematically illustrating a seal device according to a related-art example.

### Description of Embodiments

Now, embodiments of the present invention are described with reference to the drawings.

### [PJD Device]

A seal device according to the present invention is suitably applied to, for example, a powder jet deposition device (hereinafter referred to as "PJD device") used for dental treatment. The PJD device is a device used for film forming processing (powder jet deposition method) of injecting solid fine particles onto an object at high speed at normal temperature under normal pressure and causing the solid fine particles to collide with the object to form a film-forming layer in which the solid fine particles are adhered on the object. As the solid fine particles, generally, powdery fine particles having a particle diameter of from about 0.1 µm to about 10 µm are used. There has been an attempt for practical use of the film forming processing with the PJD device in various technical fields.

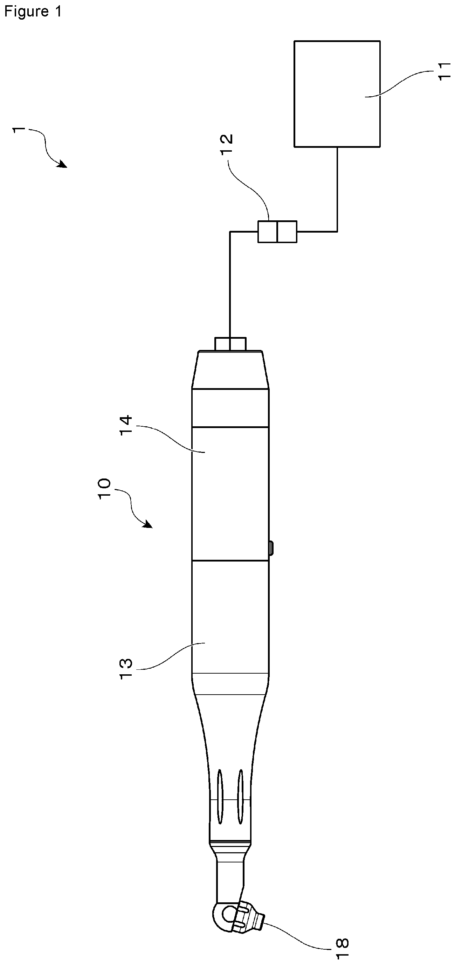

FIG. 1 shows an example of a PJD device 1. The PJD device 1 includes a hand piece 10 and a fine particle supply unit 11. The hand piece 10 includes a nozzle 18 that injects solid fine particles toward a surface of a tooth of a patient. The fine particle supply unit 11 mixes and disperses solid fine particles with gas such as air or nitrogen gas and supplies the solid fine particles subjected to dispersion treatment to have a predetermined particle diameter to the hand piece 10 along with jet flow of the gas. In the example illustrated in FIG. 1, the hand piece 10 and the fine particle supply unit 11 are connected to each other via a pipe such as a hose separably coupled by a connector 12.

The seal device according to the present invention can be suitably applied to, for example, a coupling portion for flow paths, which are separably coupled to each other, formed in the hand piece 10 or the connector 12 in such a PJD device 1. So, the seal device is used as a device which closes a gap in the coupling portion for the coupled flow paths, and improves airtightness of the flow path to stabilize flow (flow velocity or flow rate) of the solid fine particles.

### [First Embodiment]

A first embodiment in which the seal device according to the present invention is applied to a coupling portion 15 for a flow path 16 (16A and 16B) formed in the hand piece 10 is described.

In the hand piece 10, the solid fine particle flow path 16 for causing solid fine particles to flow through along with jet flow of gas is formed so as to extend along an axial direction. With this, the solid fine particles supplied from a rear end side of the hand piece 10 flow through the solid fine particle flow path 16 to be injected from the nozzle 18 provided on a distal end side of the hand piece 10.

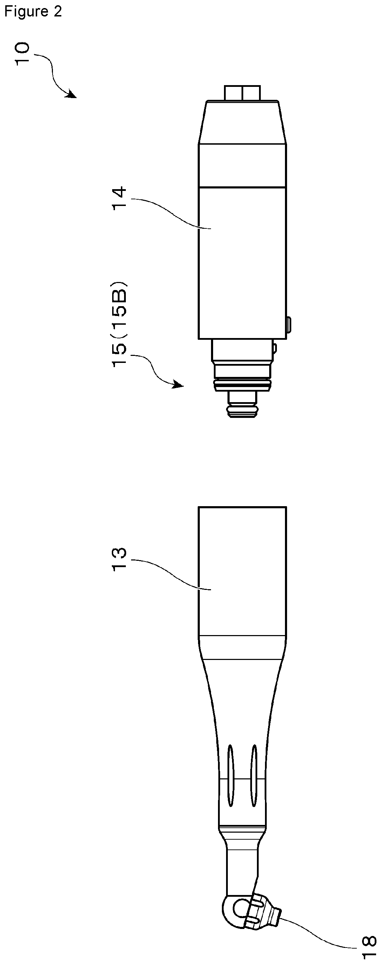

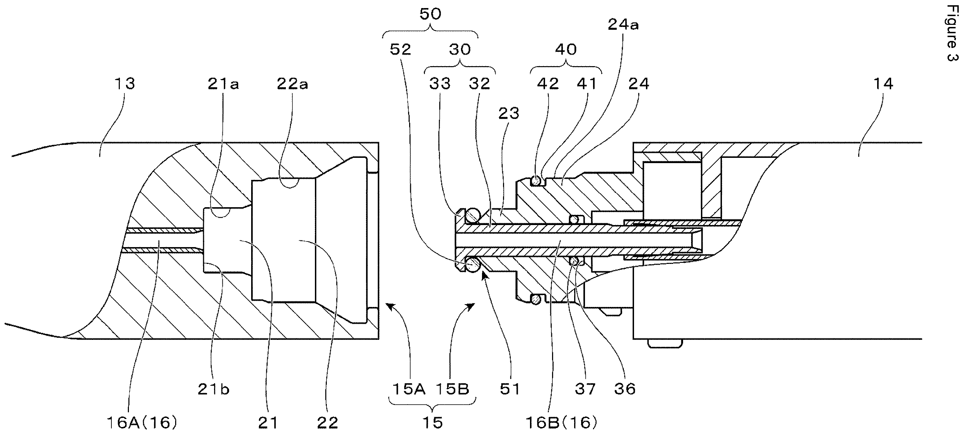

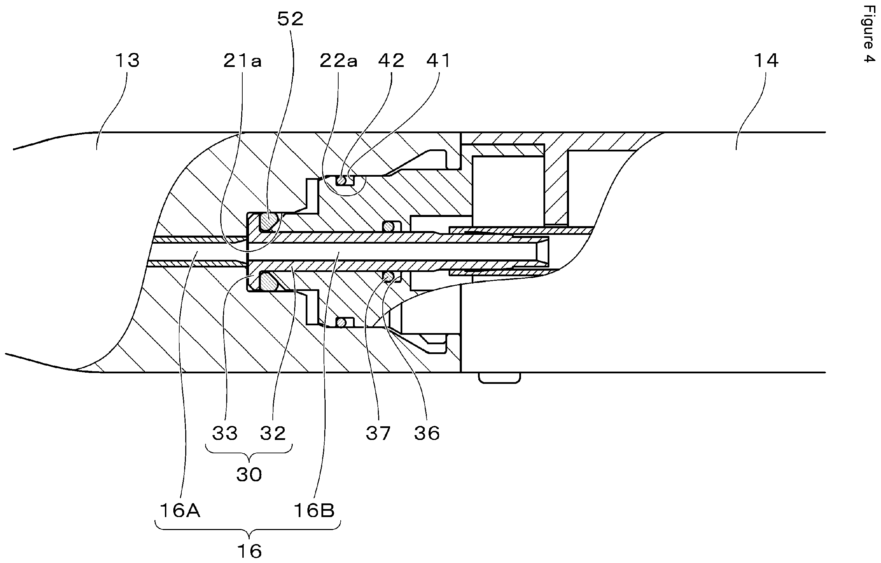

As illustrated in FIG. 2, the hand piece 10 is separable into a front-part casing (first flow path member) 13 and a rear-part casing (second flow path member) 14, and the front-part casing 13 and the rear-part casing 14 are removably coupled to each other via the coupling portion 15. The front-part casing 13 and the rear-part casing 14 have a first flow path 16A and a second flow path 16B formed therein, respectively. When the front-part casing 13 and the rear-part casing 14 are coupled to each other, the first flow path 16A and the second flow path 16B are coupled to each other to form the solid fine particle flow path 16 (see FIG. 4). When the front-part casing 13 and the rear-part casing 14 are decoupled from each other, the solid fine particle flow path 16 is separated into the first flow path 16A and the second flow path 16B (see FIG. 3).

The coupling portion 15 includes a female coupling portion 15A provided on the front-part casing 13 side, and a male coupling portion 15B provided on the rear-part casing 14 side. The male coupling portion 15B is inserted into the female coupling portion 15A to couple the front-part casing 13 and the rear-part casing 14 to each other. The specific configurations of the female coupling portion 15A and the male coupling portion 15B are not particularly limited. The coupling portion 15 may be formed with the front-part casing 13 as a male side and the rear-part casing 14 as a female side.

In the illustrated example, the female coupling portion 15A includes two recessed portions 21 and 22 formed in a stepped shape at a rear portion of the front-part casing 13. These recessed portions 21 and 22 include a cylindrical first recessed portion 21, and a cylindrical second recessed portion 22 formed behind the first recessed portion 21 to have a diameter larger than that of the first recessed portion 21. The first flow path 16A is formed at a center portion of the first recessed portion 21.

Meanwhile, the male coupling portion 15B includes two protruding portions 23 and 24 that are formed in a stepped shape at a front portion of the rear-part casing 14, and are inserted into the two recessed portions 21 and 22 of the female coupling portion 15A. These protruding portions 23 and 24 include a first protruding portion 23 that has a circular outer periphery and is inserted into the first recessed portion 21, and a second protruding portion 24 that is formed behind the first protruding portion 23 to have a diameter larger than that of the first protruding portion 23 and is inserted into the second recessed portion 22. The second flow path 16B to be coupled to the first flow path 16A is formed at a center portion of the first protruding portion 23.

Further, the coupling portion 15 between the front-part casing 13 and the rear-part casing 14 includes a first sealing mechanism 40 that seals a space between the second recessed portion 22 and the second protruding portion 24, and a second sealing mechanism 50 that seals a space between the first recessed portion 21 and the first protruding portion 23 in order to prevent leakage of solid fine particles or gas to the outside from the gap in the coupling portion 15.

In the illustrated example, the seal device according to the present invention is applied to the second sealing mechanism 50.

The first sealing mechanism 40 includes a peripheral groove 41 formed in an outer peripheral surface of the second protruding portion 24, and a sealing member 42 held in the peripheral groove 41. When the front-part casing 13 and the rear-part casing 14 are coupled to each other, the sealing member 42 comes into elastic contact with an outer peripheral surface 24a of the second protruding portion 24 and an inner peripheral surface 22a of the second recessed portion 22 to close the gap between the outer peripheral surface 24a of the second protruding portion 24 and the inner peripheral surface 22a of the second recessed portion 22.

As illustrated in FIG. 3 and FIG. 4, the second sealing mechanism 50 includes a movable member 30 (sealing member deforming part), and a sealing member 52. The movable member 30 includes a cylindrical main body portion 32, and a flange portion 33 formed integrally with the main body portion 32 to protrude in an outer peripheral direction from a front end portion of the main body portion 32. The main body portion 32 of the movable member 30 itself serves as a part of the second flow path 16B, and is held so as to be slidable in a flow path direction by the rear-part casing 14 in which the second flow path 16B is formed. The sealing member 52 is arranged in a groove portion 51 formed by the main body portion 32 and the flange portion 33 of the movable member 30 and a front end portion wall 23a of the first protruding portion 23. The groove portion 51 is formed to have a changeable groove width between the rear-part casing 14 and the flange portion 30, and when the movable member 30 slides in the flow path direction, the groove width of the groove portion 51 is changed.

The movable member 30 is arranged so as to be able to reciprocate with a small resistance by a rubber-like O-ring 37 arranged in an annular peripheral groove 36 formed in an inner peripheral surface of the rear-part casing 14 that holds the movable member 30.

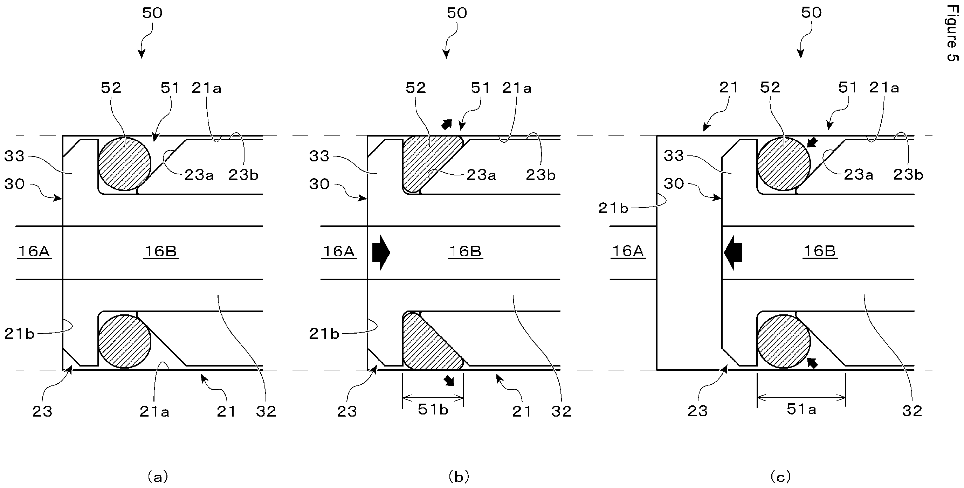

When the front-part casing 13 and the rear-part casing 14 are coupled to each other, as illustrated in FIG. 5(b), the sealing member 52 is deformed to close the gap between the outer peripheral surface 23b of the first protruding portion 23 and the inner peripheral surface 21a of the first recessed portion 21, thereby preventing leakage of the solid fine particles to the outside from the coupling portion between the first flow path 16A and the second flow path 16B. The specific operation example of such a second sealing mechanism 50 is described with reference to FIGS. 5.

At the time of coupling the front-part casing 13 and the rear-part casing 14 to each other, when the first protruding portion 23 of the male coupling portion 15B is inserted into the first recessed portion 21 of the female coupling portion 15A, as illustrated in FIG. 5(a), the flange portion 33 of the movable member 30 is brought into abutment against the front end portion wall 21b of the first recessed portion 21. A slight gap is formed between the sealing member 52 and the inner peripheral surface 21a of the first recessed portion 21 until the flange portion 33 of the movable member 30 is brought into abutment against the front end portion wall 21b of the first recessed portion 21, and hence the first protruding portion 23 can be inserted into the first recessed portion 21 without any resistance, thereby improving ease of operation.

Further, when the first protruding portion 23 is further inserted from the state of FIG. 5(a), as illustrated in FIG. 5(b), the movable member 30 is pressed by the front end portion wall 21b to be slid rearward as indicated by the arrow in FIG. 5(b). Along with this, the flange portion 33 is moved, and the groove portion 51 is narrowed to have a width 51b so that an external force is applied to the sealing member 52. With this, the sealing member 52 is deformed so as to protrude in the outer peripheral direction while being compressed to reliably close the gap between the outer peripheral surface 23b of the first protruding portion 23 and the inner peripheral surface 21a of the first recessed portion 21.

Further, when the front-part casing 13 and the rear-part casing 14 is to be decoupled from each other, and the rear-part casing 14 (male coupling portion 15B) is to be pulled out from the front-part casing 13 (female coupling portion 15A), as illustrated in FIG. 5(c), the flange portion 33 of the movable member 30 is separated from the front end portion wall 21b of the first recessed portion 21, and the flange portion 33 is pressed by an elastic force of the sealing member 52, and the flange portion 33 is moved forward as indicated by the arrow in FIG. 5(c) so that the groove portion 51 is expanded to have a width 51a of the original state. With this, the external force to the sealing member 52 is eliminated, and the sealing member 52 is accommodated in the groove portion 51 under a state of being restored to an original shape due to elastic deformation. Thus, a slight gap is formed between the sealing member 52 and the inner peripheral surface 21a of the first recessed portion 21, and the rear-part casing 14 can be pulled out without any resistance, thereby improving the ease of operation.

Further, the front end portion wall 23a of the first protruding portion 23 has a tapered surface inclined so as to be gradually increased in diameter toward the rear side. With this, a space for allowing the sealing member 52 to be deformed can be secured, and when the flange portion 33 applies an external force to the sealing member 52, the sealing member 52 is guided in the outer peripheral direction along the tapered surface so that a contact pressure of the sealing member 52 against the inner peripheral surface 21a of the first recessed portion 21 can be increased.

Further, when the hand piece 10 is to be separated, the space for allowing the sealing member 52 to be easily restored to the original shape can be secured, and movement of the movable member 30 is facilitated.

In this embodiment, a predetermined gap is secured between the sealing member 52 and the inner peripheral surface 21a of the first recessed portion 21, but it is not always required that the gap be secured. Preferably, the outer diameter, the hardness, and the like of the groove portion 51 or the sealing member 52 are appropriately set such that, when the hand piece 10 is to be separated, the sealing member 52 is brought into contact at a minimum necessary contact pressure, and at the time of coupling, the sealing member 52 is brought into contact at a contact pressure necessary for preventing leakage of solid fine particles. Further, the sealing member 52 may be any material or shape as long as the sealing member 52 is elastically deformable, and a rubber-like O-ring is used as an example.

The second sealing mechanism 50 configured as described above as the seal device according to this embodiment includes the first flow path 16A which allows solid fine particles pass therethrough, the second flow path 16B separably coupled to the first flow path 16A, the sealing member 52 held in the gap in the coupling portion 15 between the first flow path 16A and the second flow path 16B, and the movable member 30 that mechanically applies an external force to the sealing member 52 when the first flow path 16A and the second flow path 16B are to be coupled to each other to deform the sealing member 52 and close the gap in the coupling portion 15.

Further, the movable member 30 eliminates the external force mechanically applied to the sealing member 52 when the first flow path 16A and the second flow path 16B are to be decoupled from each other to allow the deformed sealing member 52 to be restored to the original shape.

Thus, in the coupled state, the contact pressure of the sealing member 52 can be increased, and at the time of coupling operation or decoupling operation, the contact pressure of the sealing member 52 can be reduced. Accordingly, leakage of substances from the gap in the coupling portion 15 can be reliably prevented while improving the ease of operation at the time of coupling operation or decoupling operation.

Further, the front end portion wall 23a of the first protruding portion 23 has the tapered surface inclined so as to be gradually increased in diameter toward the rear side. Thus, the space for allowing the sealing member 52 to be deformed can be secured, and when the flange portion 33 applies an external force to the sealing member 52, the sealing member 52 is guided in the outer peripheral direction along the tapered surface, thereby being capable of improving the contact pressure of the sealing member 52 against the inner peripheral surface 21a of the first recessed portion 21.

### [Second to Eighth Embodiments]

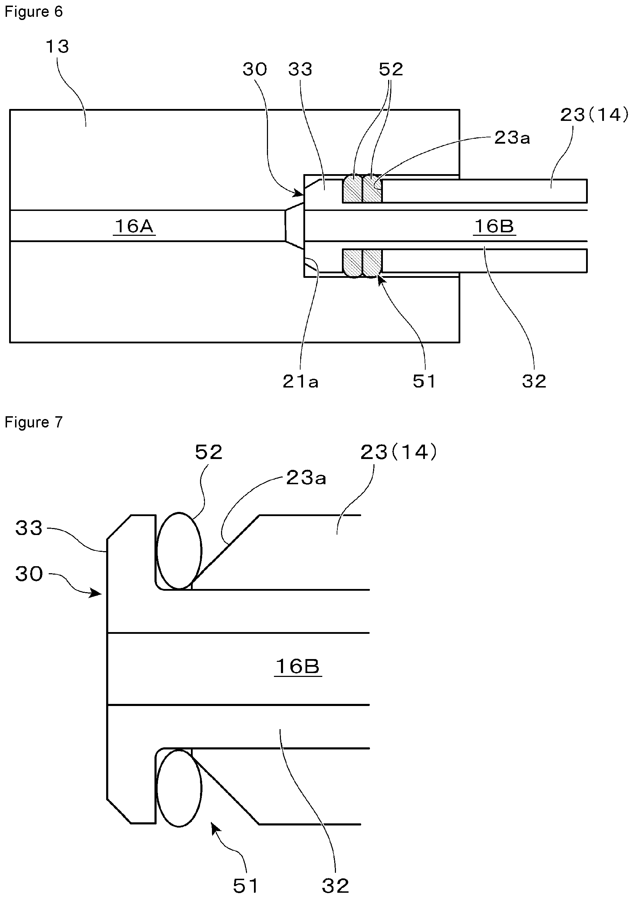

Next, seal devices according to second to eighth embodiments of the present invention are described with reference to FIG. 6 to FIG. 12.

The same reference symbols as those of the above-mentioned embodiment are used for configurations common to the above-mentioned embodiment, and the description of the above-mentioned embodiment may be incorporated herein by reference.

As illustrated in FIG. 6, the seal device according to the second embodiment is different from the above-mentioned embodiment in that two sealing members 52 formed of an O-ring are arranged in parallel in one groove portion 51. According to such a seal device, further improvement in sealability can be expected.

As illustrated in FIG. 7, the seal device according to the third embodiment is different from the above-mentioned embodiment in that an O-ring having an elliptical sectional shape is applied to the sealing member 52. Even with such a seal device, the same effects as those of the above-mentioned embodiment are obtained.

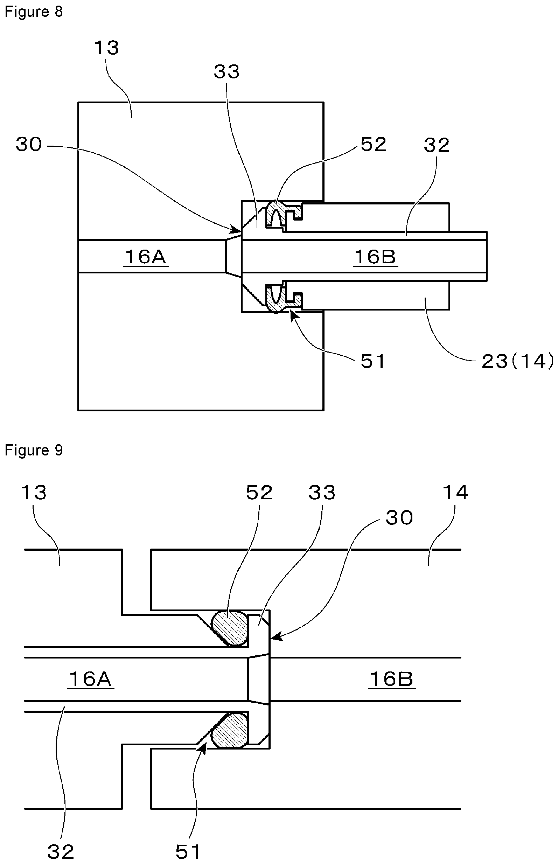

The seal device according to the fourth embodiment is different from the above-mentioned embodiment in that the sealing member 52 has a plate-like sectional shape as illustrated in FIG. 8. Specifically, the sealing member 52 formed in a plate shape is arranged while being curved so as to protrude with respect to the groove portion 51. Further, in the case of this embodiment, the sealing member 52 may fall off from the groove portion 51. Thus, for example, it is preferred that an engagement member for causing a part of the sealing member 52 to be engaged with the rear-part casing 14 (first protruding portion 23) be provided to the sealing member 52 to fix the sealing member 52 to the rear-part casing 14 (first protruding portion 23). Even with such a seal device, the same effects as those of the above-mentioned embodiment are obtained.

The seal device according to the fifth embodiment is different from the above-mentioned embodiment in that the first flow path 16A side is formed as a male side and the second flow path 16B side is formed as a female side, and the movable member 30 is mounted on the first flow path 16A side as illustrated in FIG. 9. Even with such a seal device, the same effects as those of the above-mentioned embodiment are obtained.

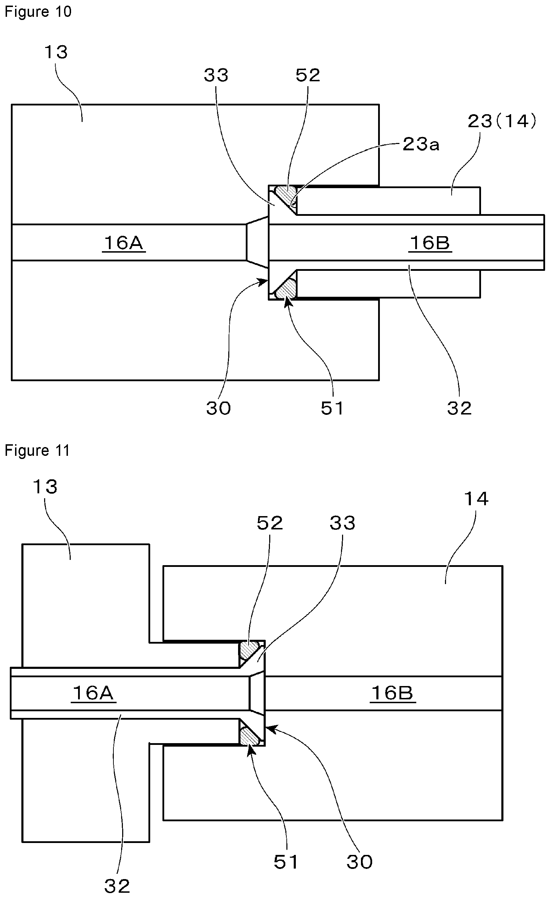

The seal device according to the sixth embodiment is different from the above-mentioned embodiment in that a tapered surface is formed not on the front end portion wall 23a of the first protruding portion 23 but on the flange portion 33 side of the groove portion 51 as illustrated in FIG. 10. Even with such a seal device, the same effects as those of the above-mentioned embodiment are obtained.

The seal device according to the seventh embodiment is different from the above-mentioned embodiment in that the first flow path 16A side is formed as a male side and the second flow path 16B side is formed as a female side, the movable member 30 is mounted on the first flow path 16A side, and the a tapered surface is formed on the flange portion 33 side of the groove portion 51 as illustrated in FIG. 11. Even with such a seal device, the same effects as those of the above-mentioned embodiment are obtained.

The seal device according to the eighth embodiment is different from the above-mentioned embodiment in that the movable member 30 is mounted to the first flow path 16A side as a female side, and a tapered surface is formed on the flange portion 33 side of the groove portion 51 as illustrated in FIG. 12. According to such a seal device, an adhesion strength between the flange portion 33 and a front end surface of the rear-part casing 14 in contact with the flange portion 33 can be easily improved, thereby being capable of preventing leakage of substances from the coupling portion similarly to the above-mentioned embodiment.

The preferred embodiment of the seal device according to the present invention is described above, but the seal device according to the present invention is not limited to the embodiments described above. It goes without saying that various modifications can be made within the scope of the present invention.

For example, in the above-mentioned embodiment, an example in which the present invention is applied to the coupling portion for the flow paths, which are separably coupled to each other, formed in the hand piece 10 of the PJD device 1 in the dental treatment system has been described, but the present invention is not limited thereto. The present invention may be applied to the coupling portion for the flow paths which are separably coupled to each other in various devices, thereby being capable of preventing leakage of substances from the gap in the coupled flow path.

### Reference Signs List

1 powder jet deposition device
10 hand piece
11 fine particle supply unit
13 front-part casing (first flow path member)
14 rear-part casing (second flow path member)
15 coupling portion
16 solid fine particle flow path
16A first flow path
16B second flow path
18 jet nozzle
19 jetting port
21 first recessed portion
21a inner peripheral surface
21b front end portion wall
22 second recessed portion
22a inner peripheral surface
23 first protruding portion
23a front end portion wall (tapered surface)
23b outer peripheral surface
24 second protruding portion
24a outer peripheral surface
30 movable member (sealing member deforming part)
32 main body portion
33 flange portion
36 peripheral groove
37 O-ring
40 first sealing mechanism
41 peripheral groove
42 sealing member
50 second sealing mechanism (seal device)
51 groove portion
52 sealing member

## Claims

1. A seal device comprising:
a first flow path which allows substances to pass therethrough;
a second flow path separably coupled to the first flow path;
a sealing member, which has elasticity, and is held in a gap in a coupling portion between the first flow path and the second flow path; and
a sealing member deforming part that closes the gap in the coupling portion by deforming the sealing member when the first flow path and the second flow path are to be coupled to each other.

2. The seal device according to claim 1, wherein the sealing member deforming part allows the deformed sealing member to restore to an original shape when the first flow path and the second flow path are to be decoupled from each other.

3. The seal device according to claim 1 or 2, wherein the sealing member deforming part mechanically applies an external force to the sealing member or eliminates the external force.

4. The seal device according to claim 3,
wherein the sealing member deforming part includes:
a main body portion, which has a cylindrical shape, and serves as a part of the first flow path or the second flow path and is held so as to be slidable in a flow path direction by a first flow path member in which the first flow path is formed or a second flow path member in which the second flow path is formed; and
a flange portion protruding in an outer peripheral direction from one end portion of the main body portion,
wherein the sealing member is arranged in a groove portion formed so as to have a changeable groove width between one of the first flow path member and the second flow path member holding the main body portion and the flange portion,
wherein, when the first flow path and the second flow path are to be coupled to each other, the flange portion is moved by being pressed by another one of the first flow path member and the second flow path member to apply a mechanical external force to the sealing member, and
wherein, when the first flow path and the second flow path are to be decoupled from each other, pressing of the flange portion by the another one of the first flow path member and the second flow path member is released to eliminate the external force to the sealing member.

5. The seal device according to claim 4, wherein the groove portion has a tapered surface that guides the sealing member in an outer peripheral direction when the flange portion applies the mechanical external force to the sealing member.
